# EUROPÄISCHE PATENTANMELDUNG

(11) **EP 0 682 860 A1**
(43) Veröffentlichungstag der Anmeldung: **22.11.1995**
(21) Anmeldenummer: 95106543.2
(22) Anmeldetag: 29.04.1995
(51) Int. Cl.: A01F 12/44

(54) **Verstellvorrichtung für wenigstens eine schwenkbare Lamelle eines Siebes**

(30) Priorität: 19.05.1994 US 246001
(71) Anmelder: DEERE & COMPANY, Moline, Illinois 61265 (US)
(72) Erfinder: Pearson, Mark Leonard, LeClaire, Iowa 52753 (US); Hansen, Gary Lynn, East Moline, Illinois 61244 (US); Griffith, Gregory William, Port Byron, Illinois 61275 (US); Lauer, Fritz Karl, Bettendorf, Iowa 52722 (US); Rogers, David Wayne, Moline, Illinois 61265 (US)
(74) Vertreter: Feldmann, Bernhard

(57) **Zusammenfassung**

Eine Verstellvorrichtung für Lamellen (44) eines Siebes (40) weist ein Längsglied (52) auf, in das die Lamellen (44) tragende Kurbelwellen (46) schwenkbar eingreifen. Zur Verstellung der Lamellen (44) ist ein sich senkrecht zu dem Längsglied (52) erstreckendes Verstellglied (68) vorgesehen, das mittels zweier ein Winkelgetriebe bildender Räder (60, 66), eines Gewindeglieds (54) und eines Gewindeschafts (57) das Längsglied (52) axial verschiebt.

## Beschreibung

Die Erfindung betrifft eine Verstellvorrichtung für wenigstens eine schwenkbare Lamelle eines Siebes mit einem Längsglied, an dem die Lamelle über einen Hebelarm angreift, und mit einem quer zu dem Längsglied verlaufenden Verstellglied zur axialen Verstellung des Längsglieds.

Die DE-A-1 952 808 offenbart eine Verstellvorrichtung für ein Lamellensieb eines Mähdreschers, wobei die Lamellen auf schwenkbaren Drähten befestigt sind, die auf ihrer halben Länge von der Längsachse ausgebogen sind, um einen Hebelarm zu bilden, der in eine sich längs, d. h. in der Förderrichtung des Lamellensiebs, erstreckende Verstelleiste beweglich eingreift. Auf diese Weise können mittels einer Längsverschiebung der Verstelleiste alle Lamellen um einen gewünschten Betrag geschwenkt werden. Zur Verschiebung der Verstelleiste ist eine Querwelle vorgesehen, die über einen sich von ihr radial erstreckenden Hebelarm und einen Lenker an der Verstelleiste angreift. Die Querwelle erstreckt sich durch eine Öffnung in einer Seitenwand eines Siebkastens und kann außerhalb von diesem um ihre Längsachse geschwenkt und mittels eines Rasthebels arretiert werden.

Aus der US-A-5,502,493 und der US-A-3,347,375 gehen jeweils ein Sieb mit über eine Verstelleiste einstellbaren Lamellen hervor, wobei zur Verstellung der Verstelleiste eine Gewindestange und eine Mutter vorgesehen sind, die in den Siebrahmen integriert sind oder sich an diesem abstützen und somit infolge einer auf sie ausgeübten Drehbewegung eine Längsverstellung der Verstelleiste bewirken.

Eine derartige Verstellvorrichtung der Verstelleiste ist nachteilig, weil sie nur hinter dem Sieb stehend bedient werden kann.

Schließlich zeigt die US-A-4,897,072 eine Verstellvorrichtung für Lamellensiebe mit einem Bowdenzug, über den eine Gewindestange in Drehung versetzt werden kann, die über eine auf sie aufgeschraubte Gewindehülse zwei Stellhebel für die Lamellen bewegt.

Die der Erfindung zugrundeliegende Aufgabe wird darin gesehen, eine Verstellvorrichtung für wenigstens eine Lamelle eines Siebs vorzuschlagen, die von einer Stelle seitlich des Siebs aus bedienbar ist und eine feinfühlige Einstellung ermöglicht.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann über das Verstellglied eine Verstellung seitlich des Siebs eingeleitet werden, wobei das Gewinde des Gewindeglieds abhängig von der gewählten Steigung eine sehr feinfühlige Veränderung möglich macht.

Die Umlenkung der Bewegung des Verstellglieds auf das sich senkrecht oder im wesentlichen senkrecht dazu erstreckende Längsglied kann auf jede Weise erfolgen, die gewährleistet, daß ein Hebelarm bekannter Art auf dem Verstellglied vermieden wird, da dieser mit der Veränderung seiner Stellung auch eine Änderung der Stellkraft bewirkt. Als besonders vorteilhaft gilt die Verwendung einer Zahnstange, einer Schneckenspindel oder eines insbesondere als Kegelrad ausgebildeten weiteren Rads, das mit dem Rad in Eingriff steht.

Wenn ein Endabschnitt des Verstellglieds zur Aufnahme eines Stellmittels geeignet ist, z. B. indem es ein kantiges Innen- oder Außenprofil oder dergleichen aufweist, ist eine einfachere Verstellung mit geringerem Kraftaufwand möglich. Allerdings kann ein Stellmittel auch über Klemmkräfte angreifen. Eine Verstellung von außerhalb des das oder die Siebe, z. B. Körnersieb und Kurzstrohsieb, aufnehmenden Gehäuses, z. B. eines Siebkastens, ist dann problemlos möglich, wenn sich dieser Endabschnitt durch eine Öffnung in der betreffenden Seitenwand nach außen erstreckt.

Eine andere Art des formschlüssigen Anschlusses des Stellmittels an das Verstellglied sieht einen z. B. durch eine Welle gesteckten Spannstift vor, der mit einem Schlitze aufweisenden Werkzeug in Eingriff gebracht werden kann.

Die Verstellung des Verstellglieds kann auf sehr einfache und genau steuerbare Weise mittels eines Motors erfolgen, der z. B. von einer Fahrerkabine aus oder mittels einer elektronischen Regelungsvorrichtung betrieben wird.

Zur Übertragung der Drehbewegung des Rades auf das Gewindeglied ist es sinnvoll, daß das Gewindeglied mit Innengewinde in einer Hülse oder in Muttern ausgebildet ist, das mit einem Außengewinde auf einem mit dem Rad drehfest verbundenen Gewindeschaft in Eingriff steht, oder das Gewindeglied als Gewindeschaft mit Außengewinde ausgebildet ist, das mit einem Innengewinde in dem Rad in Eingriff steht, wobei der Gewindeschaft vorzugsweise mittels des Längsglieds gegen Drehung gesichert ist.

Eine gleichmäßige Verstellung mehrerer Lamellen mit einfachen Mitteln wird erreicht, wenn die Lamellen auf Kurbelwellen befestigt sind, deren die Kurbel bildender Teil den Hebelarm ergibt, der insbesondere in einem Schlitz des Längsglieds beweglich aufgenommen ist. Unter einer derartigen Kurbelwelle wird herkömmlich ein starker Draht verstanden, der in dem Bereich des Längsglieds U-förmig ausgebuchtet ist, wobei dieser ausgebogene Bereich in das Längsglied formschlüssig aber beweglich eingreift.

Eine besonders präzise Verstellung unter Vermeidung von Spiel wird durch die Verwendung eines Kegelradgetriebes erreicht, wobei zur Regulierung der Stellkräfte auch eine Über- oder Untersetzung der Drehzahl vorgesehen werden kann. Die Kegelräder können in einem derartigen Fall auch aus einem harten Kunststoff gebildet werden, der unanfällig gegen die Säfte der geernteten Pflanzen ist.

Wenn die Stellung der Lamelle(n) über eine Stellung des Verstellglieds erfaßt und angezeigt oder in einen Datenverarbeitungsprozeß eingespeist werden kann, z. B. mittels eines Sensors, kann die Öffnungsweite des Siebs in einem Regelprozeß verarbeitet bzw. von einer Bedienungsperson überwacht werden.

In der Zeichnung ist ein nachfolgend näher beschriebenes Ausführungsbeispiel der Erfindung dargestellt. Es zeigt:
- Fig. 1: eine Dreschmaschine in Seitenansicht,
- Fig. 2: eine erfindungsgemäße Verstellvorrichtung in Seitenansicht und im Vertikalschnitt,
- Fig. 3: die erfindungsgemäße Verstellvorrichtung nach Figur 2 in einer Ansicht von unten und
- Fig. 4: die erfindungsgemäße Verstellvorrichtung nach Figur 2 in Draufsicht und in einem gegenüber Figur 3 geänderten Betriebszustand.

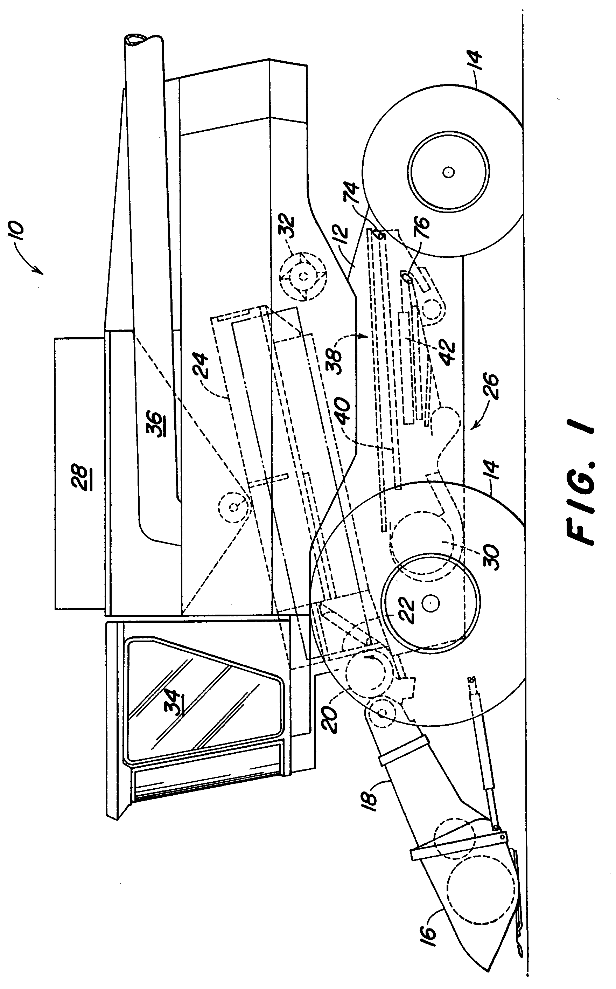

Figur 1 ist eine Seitenansicht einer Dreschmaschine 10 in der Art eines selbstfahrenden landwirtschaftlichen Mähdreschers. Diese Dreschmaschine 10 enthält ein Traggestell 12 mit Rädern 14, die dieses Traggestell 12 auf dem Boden abstützen. Das Traggestell 12 weist zwei sich in der Längsrichtung erstreckende Seitenteile auf, zwischen denen verschiedene Bearbeitungseinrichtungen angeordnet sind. Von der Dreschmaschine 10 erstreckt sich nach vorne eine Erntebergungsvorrichtung 16 in der Art eines Schneidwerks, die geerntetes Gut einem Schrägförderer 18 zuleitet. Der Schrägförderer 18 ist eine Fördervorrichtung, die geerntetes Gut, z. B. Getreide, Dresch- Abscheide- und Reinigungsvorrichtungen zwischen den Seitenteilen zuführt, wo es jeweils entsprechend bearbeitet wird. Obwohl die vorliegende Erfindung im Zusammenhang mit einem sogenannten Axialmähdrescher gezeigt und erläutert wird, kann sie selbstverständlich in Dreschmaschinen 10 anderer, insbesondere herkömmlicher Bauart, wie auch in stationären Reinigungsanlagen, mit einem Siebkasten verwendet werden.

Bei dem gezeigten Ausführungsbeispiel der Dreschmaschine 10 führt der Schrägförderer 18 das Erntegut einer querliegenden Trommel 20 zu, die es durch einen Übergangsabschnitt 22 einer axial wirkenden Dresch- und Abscheidevorrichtung 24 aufgibt. Das Getreide und die Spreu werden von dieser Dresch- und Abscheidevorrichtung 24 einer Reinigungsvorrichtung 26 aufgegeben. Von der Reinigungsvorrichtung 26 aus gelangt gereinigtes Getreide in einen Korntank 28, während die Spreu mittels eines Gebläses 30 zum rückwärtigen Ende der Dreschmaschine 10 hinausgeblasen wird. Erntegut, das weder gereinigtes Getreide noch Spreu ist, wird von der axialen Dresch- und Abscheidevorrichtung 24 einer ebenfalls quer gelagerten Trommel 32 zugeführt, die es wiederum zum rückwärtigen Ende der Dreschmaschine 10 auswirft. In dem Korntank 28 zwischenzeitlich gelagertes gereinigtes Getreide kann von einer sich in einer Fahrerkabine 34 befindlichen Bedienungsperson durch die Inbetriebnahme einer Entladeschnecke 36 ausgetragen werden. Die Dresch- und Abscheidevorrichtung 24, sowie die Reinigungsvorrichtung 26 befinden sich zwischen den Seitenteilen des Traggestells 12.

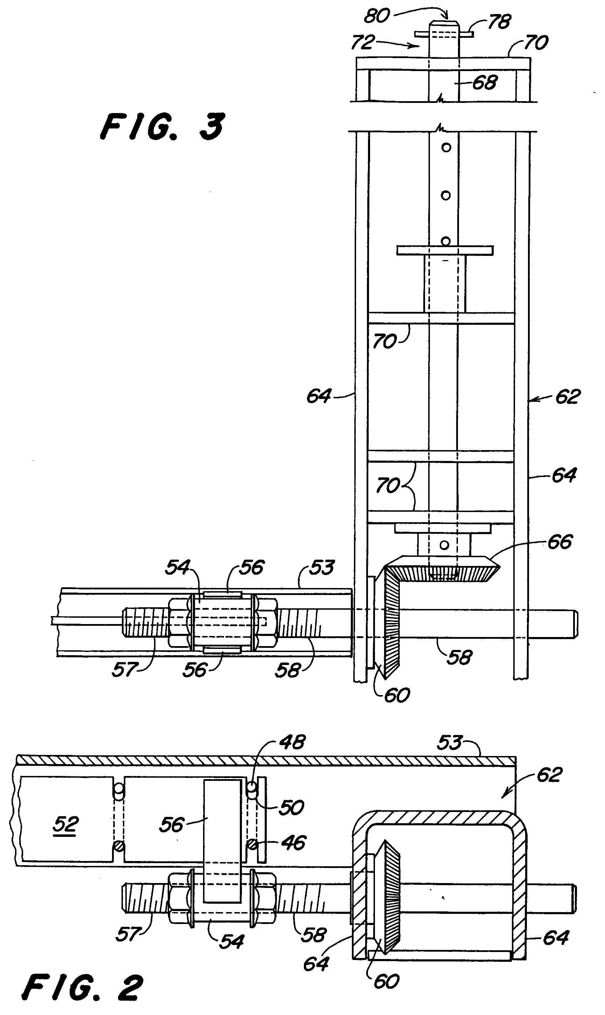

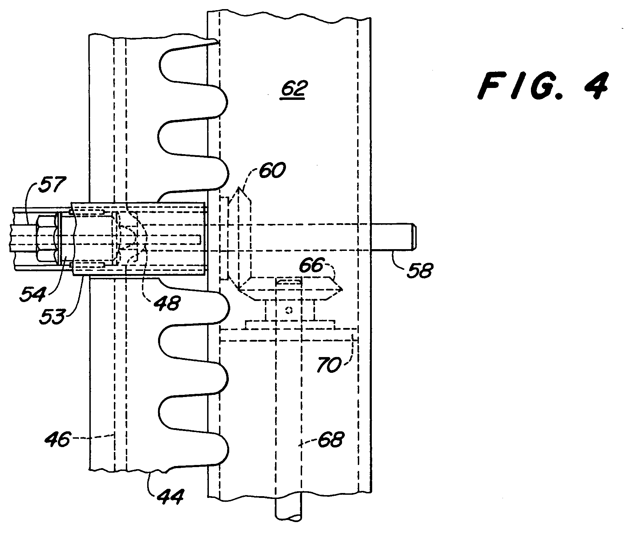

Die vorliegende Erfindung ist auf eine Vorrichtung zum Einstellen von Sieblamellen in einem Gehäuse 38 in der Art eines Siebkastens von der Seite der Dreschmaschine 10 aus gerichtet. Das Gehäuse 38 ist mit einem Sieb 40 in der Art eines Kurzstrohsiebs und mit einem Sieb 42 in der Art eines Körnersiebs ausgestattet, die mit quer zur Gutstromrichtung ausgerichteten Lamellen 44 versehen sind, wie sie am besten aus Figur 4 hervorgehen, und die in einem rechteckförmigen Rahmen eingebaut sind, der an den Seitenwänden des Gehäuses 38 befestigt ist. Jede der Lamellen 44 ist mit einer Kurbelwelle 46 mit einem Hebelarm 48 versehen. Der Hebelarm 48 ist in einem Schlitz 50 eines sich längs erstreckenden Längsglieds 52 in der Art einer Einstellstange untergebracht. Infolge einer Längsbewegung des Längsglieds 52 kann die Neigung aller Lamellen 44 in den Sieben 40, 42 verändert und somit eingestellt werden. Das Längsglied 52 ist in einem umgekehrten, d. h. nach unten offenen, sich längs erstreckenden U-förmigen Gehäuses 53 aufgenommen. Dieses Gehäuse 53 ist lediglich in Figur 2 in seiner ganzen Länge gezeigt, während es in den Figuren 3 und 4 der Übersichtlichkeit wegen gekürzt dargestellt ist.

Das Längsglied 52 ist mittels eines z. B. angeschweißten Bügels 56 an ein mit Innengewinde versehenes Gewindeglied 54 angeschlossen. Das Gewindeglied 54 kann als eine Hülse mit einem Innengewinde ausgebildet sein, aber auch aus einer Hülse bestehen, an die einenends oder beidenends eine Mutter angeschweißt ist. Das Gewindeglied 54 ist an einen Gewindeschaft 57 einer längs ausgerichteten drehbaren Welle 58 angebracht, die mit einem sich in der Längsachse befindlichen als Kegelrad ausgebildeten Rad 60 versehen ist. Das in der Längsachse gelegene bzw. um sie drehbare Rad 60 ist in einem nach unten offenen U-förmigen Kanal 62 untergebracht, der die Abschlußwand des jeweiligen Siebs 40 und/oder 42 bildet. Die drehbare Welle 58 erstreckt sich durch beide Wände 64 des Kanals 62, um eine Verbiegung zu vermeiden.

Ein weiteres Rad 66 in der Art eines Kegelrads, das um eine Längsachse dreht, die senkrecht zu der Längsachse der Welle 58 verläuft, kämmt mit dem Rad 60 und ist auf eine sich quer erstreckende drehbare Welle, die ein Verstellglied 68 bildet, montiert. Eine Vielzahl von Stegen 70 erstreckt sich quer über den Kanal 62, um auch das Verstellglied 68 gegen Biegung zu schützen. Das Verstellglied 68 erstreckt sich ungefähr über die Hälfte des Abstandes zwischen den Seitenteilen in der Querrichtung. Das Verstellglied 68 läuft in einem Endabschnitt 72 aus, der sich in der Nähe von Auslässen 74, 76 der Siebe 40 oder 42 zwischen den Seitenteilen des Traggestells 12 der Dreschmaschine 10 erstreckt. Der Endabschnitt 72 ist mit einem Griff 80 versehen, der einen das Verstellglied 68 durchdringenden Stift 78 enthält.

Wenn eine Bedienungsperson die Öffnungsweite zwischen den Lamellen 44 eines oder beider Siebe 40, 42 verstellt, benutzt sie hierzu als Stellmittel ein nicht gezeigtes Werkzeug mit zwei Schlitzen, die den Stift 78 übergreifen. Das Werkzeug ist mit einem Hebel oder einer Kurbel versehen, um das Verstellglied 68 zu drehen und damit ein oder beide Siebe 40, 42 zu verstellen. Dieser Formschluß entspricht dem der in der US-A-4,969,853 gezeigten Vorrichtung zum Entfernen eines Axialabscheidemoduls.

Nach einem anderen Ausführungsbeispiel der Erfindung ist eine nicht drehbare Stange mit einem Außengewindeabschnitt an das Längsglied 52 angeschlossen. Der Außengewindeabschnitt der nicht drehbaren Stange steht in Eingriff mit einem Innengewindeteil des sich in Längsrichtung erstreckenden Rads 60, um das Längsglied 52 in der Längsrichtung nach vorne und hinten in der Dreschmaschine 10 zu bewegen. Das um die Querachse drehbare Rad 66, die quer verlaufende Welle 68 und der Griff 80 sind in gleicher Weise ausgebildet.

Es wird darauf hingewiesen, daß der Außengewindeabschnitt der nicht-drehbaren Stange einen Gewindeteil bildet, der dem Gewindeglied 54 entspricht, das mit dem in Längsrichtung gelegenen Rad 60 zusammenwirkt, um das Längsglied 52 in der Längsrichtung anzutreiben.

Die Darstellung der Figur 4 zeigt Lamellen 44, die die zwischen sich gelegene Spalte weiter verschließen, als dies in Figur 3 der Fall ist.

## Patentansprüche

1. Verstellvorrichtung für wenigstens eine schwenkbare Lamelle (44) eines Siebes (40, 42) mit einem Längsglied (52), an dem die Lamelle (44) über einen Hebelarm (48) angreift und mit einem quer zu dem Längsglied (52) verlaufenden Verstellglied (68) zur axialen Verstellung des Längsglieds (52), dadurch gekennzeichnet, daß an dem Längsglied (52) ein Gewindeglied (58) angreift, das mittels des Verstellglieds (68) und eines Rades (60) drehbar ist.

2. Verstellvorrichtung nach Anspruch 1, dadurch gekennzeichnet, daß das Verstellglied (68) eine Zahnstange, eine Schneckenspindel oder ein insbesondere als Kegelrad ausgebildetes weiteres Rad (66) zum Eingriff mit dem Rad (60) enthält oder als solches ausgebildet ist.

3. Verstellvorrichtung nach Anspruch 1 oder 2, dadurch gekennzeichnet, daß das Verstellglied (68) einen dem Längsglied (52) abgelegenen Endabschnitt (72) aufweist, der der drehfesten Verbindung mit einem Stellmittel dient und sich durch eine Seitenwand eines das Sieb (40, 42) aufnehmenden Gehäuses (38) erstreckt.

4. Verstellvorrichtung nach Anspruch 3, dadurch gekennzeichnet, daß der Endabschnitt (72) einen Stift (78) zum formschlüssigen Anschluß eines Werkzeugs, eines flexiblen Verstellgestänges oder dergleichen aufweist.

5. Verstellvorrichtung nach Anspruch 3 oder 4, dadurch gekennzeichnet, daß das Verstellglied (68) mittels eines fernsteuerbaren, insbesondere elektrisch betriebenen, Motors verstellbar ist.

6. Verstellvorrichtung nach einem oder mehreren der vorherigen Ansprüche, dadurch gekennzeichnet, daß das Gewindeglied (54) mit Innengewinde in einer Hülse oder in Muttern ausgebildet ist, das mit einem Außengewinde auf einem mit dem Rad (60) drehfest verbundenen Gewindeschaft (57) in Eingriff steht.

7. Verstellvorrichtung nach einem oder mehreren der vorherigen Ansprüche 1 bis 5, dadurch gekennzeichnet, daß das Gewindeglied (54) als Gewindeschaft (57) mit Außengewinde ausgebildet ist, das mit einem Innengewinde in dem Rad (60) in Eingriff steht, wobei der Gewindeschaft (57) vorzugsweise mittels des Längsglieds (52) gegen Drehung gesichert ist.

8. Verstellvorrichtung nach einem oder mehreren der vorherigen Ansprüche, dadurch gekennzeichnet, daß die Lamellen (44) auf Kurbelwellen (46) befestigt sind, deren die Kurbel bildenden Teil den Hebelarm (48) bildet, der insbesondere in einem Schlitz (50) des Längsglieds (52) beweglich aufgenommen ist.

9. Verstellvorrichtung nach einem oder mehreren der vorherigen Ansprüche, dadurch gekennzeichnet, daß das Rad (60) und das weitere Rad (66) als Kegelradgetriebe zusammenwirken, das in unterschiedlichen Über- bzw. Untersetzungsverhältnissen ausgebildet sein kann.

10. Verstellvorrichtung nach einem oder mehreren der vorherigen Ansprüche, dadurch gekennzeichnet, daß die Stellung des Verstellglieds (68) mittels mechanischer Anzeigen darstellbar oder über Sensoren feststellbar und vorzugsweise einer Steuer- oder Regelvorrichtung mitteilbar ist und/oder über diese veränderbar ist.
